# EUROPÄISCHE PATENTSCHRIFT

(11) **EP 3 707 050 B1**
(45) Veröffentlichungstag und Bekanntmachung des Hinweises auf die Patenterteilung: **28.08.2024**
(21) Anmeldenummer: 18766279.6
(22) Anmeldetag: 17.09.2018
(51) Int. Cl.: B61F 5/22, F15B 15/24, B60G 17/027

(54) **NIVEAUREGELSYSTEM ZUR EINSTELLUNG DES NIVEAUS EINES FAHRZEUGS, INSBESONDERE SCHIENENFAHRZEUGS**
LEVEL CONTROL SYSTEM FOR ADJUSTING THE LEVEL OF A VEHICLE, IN PARTICULAR A RAIL VEHICLE
SYSTÈME DE MISE À NIVEAU POUR UN VÉHICULE, EN PARTICULIER UN VÉHICULE FERROVIAIRE

(30) Priorität: 09.11.2017 EP 17200882; 31.07.2018 DE 102018118466
(43) Veröffentlichungstag der Anmeldung: 16.09.2020
(73) Patentinhaber: KNORR-BREMSE Systeme für Schienenfahrzeuge GmbH, 80809 München (DE)
(72) Erfinder: WERMUND, Ulrich, 80469 München (DE); STERRETT, Mark A., Hanover, Pennsylvania 17331 (US); MUHR, Jürgen, 82284 Grafrath (DE); NIES, Eduard, 82178 Puchheim (DE)
(74) Vertreter: DTS Patent- und Rechtsanwälte PartmbB
(86) Internationale Anmeldenummer: PCT/EP2018/075008
(87) Internationale Veröffentlichungsnummer: WO 2019/091635

(56) Entgegenhaltungen:
- WO-A1-2011/032850
- AT-B- 411 349
- CZ-U1- 16 146
- DE-U1- 29 606 024
- JP-A- 2010 076 608
- US-B2- 9 315 203

## Beschreibung

Die vorliegende Erfindung betrifft ein Niveauregelsystem zur Einstellung des Niveaus eines Fahrzeugs, insbesondere Schienenfahrzeugs, mit wenigstens einem Niveauregelzylinder und einem Niveauregelkolben, wobei der Niveauregelkolben wenigstens teilweise beweglich in dem in dem Niveauregelzylinder aufgenommen ist.

Aus dem Stand der Technik sind Niveauregelsysteme für Schienenfahrzeuge bekannt, mit denen die Höhe zwischen dem Fahrgestell und der Fahrzeugkarosserie zur Höhenregulierung der Karosserie des Schienenfahrzeugs eingestellt werden kann.

Aus der DE 103 15 000 A1 geht eine Vorrichtung zur Sekundärfederung hervor. Zur Sekundärfederung ist zwischen dem Drehgestell und dem Wagenkasten ein Federelement vorgesehen, welches eine aktive hydraulische Feder, Gasfeder oder dergleichen oder aber auch eine passive Feder in Form einer nach Art einer Druckfeder ausgebildeten Stahlfeder oder dergleichen sein kann. Zum Federelement ist zwischen dem Drehgestell und dem Wagenkasten ein Zugzylinder vorgesehen, mit welchem eine gegen die Kraft des Federelements wirkende Rückstellkraft erzeugbar ist, um den Wagenkasten aus dem angehobenen Fahrtniveau in ein abgesenktes Bahnsteigniveau (Lade-/Endladeposition) zu bringen und zu halten. Eine Deaktivierung des Zugzylinders bewirkt, dass der Wagenkasten von der Rückstellkraft der Federstufe wieder in das angehobene Fahrtniveau gelangt. Bei dem Zugzylinder handelt es sich hier um einen einseitig beaufschlagbaren Hydraulikzylinder. Damit die Zugwirkung eintritt, also die Kolbenstange bei Druckmittelbeaufschlagung in den Zylinderkörper des Zugzylinders eintaucht, erfolgt eine zylinderdeckelseitige Druckmittelbeaufschlagung des innenliegenden Kolbens.

Aus der US 9,315,203 B2 ist ebenfalls ein Niveauregelsystem für ein Schienenfahrzeug bekannt, das mittels Hydraulikzylindern den Wagenkasten des Schienenfahrzeugs anheben kann. Dabei sind die Hydraulikzylinder mit dem Fahrgestell des Schienenfahrzeugs verbunden.

Es ist daher die Aufgabe der vorliegenden Erfindung, ein Niveauregelsystem der eingangs genannten Art in vorteilhafter Weise weiter zu bilden, insbesondere dahingehend, dass ein platzsparendes Niveauregelsystem bereitgestellt wird, welches eine sichere Einstellung eines Niveaus eines Fahrzeugs sowie eine effiziente und kostengünstige Montage und Wartung ermöglicht.

AT 411 349 B beschreibt eine Federungsvorrichtung für ein Schienenfahrzeug bestehend aus zumindest einer Hauptfeder und zumindest einer zu dieser Hauptfeder in Serie geschalteten Zusatzfedervorrichtung.

Diese Aufgabe wird erfindungsgemäß gelöst durch ein Niveauregelsystem mit den Merkmalen des Anspruchs 1. Danach ist ein Niveauregelsystem zur Einstellung des Niveaus eines Fahrzeugs, insbesondere Schienenfahrzeugs, mit wenigstens einem Niveauregelzylinder und einem Niveauregelkolben vorgesehen, wobei der Niveauregelkolben wenigstens teilweise in dem Niveauregelzylinder beweglich aufgenommen ist. Der Niveauregelzylinder weist einen kragenförmigen Absatz auf, wobei das Niveauregelsystem eine erste Fixierscheibe aufweist, die mit dem Niveauregelkolben zur Übertragung einer Hubbewegung verbunden ist, wobei zwischen dem kragenförmigen Absatz des Niveauregelzylinders und der ersten Fixierscheibe wenigstens ein Distanzelement angeordnet ist.

Für den Fall, dass der Niveauregelkolben konstruktionsbedingt ohne kragenförmigen Absatz ausgebildet bzw. ausgeführt ist und stattdessen die erste Fixierscheibe vorgesehen ist, kann infolgedessen das wenigstens eine Distanzelement zwischen dem kragenförmigen Absatz des Niveauregelzylinders und der ersten Fixierscheibe angeordnet werden.

Zusätzlich oder alternativ kann vorgesehen sein, dass unmittelbar zwischen dem kragenförmigen Absatz des Niveauregelzylinders und einem Wagenkasten eines Fahrzeugs, insbesondere Schienenfahrzeugs, das wenigstens eine Distanzelement angeordnet ist. Das Distanzelement befindet sich in diesem Fall entweder in einem Zwischenraum, der den kragenförmigen Absatz des Niveauregelzylinders und den Wagenkasten direkt miteinander verbindet. Alternativ kann sich das Distanzelement auch an weiteren Bauteilen wie der ersten Fixierscheibe angeordnet sein, die im montierten Zustand zwischen dem kragenförmigen Absatz des Niveauregelkolbens und dem Wagenkasten vorgesehen sind.

Die vorliegende Erfindung beruht auf dem Grundgedanken, dass die Montage eines Niveauregelsystems durch eine integrale Konstruktion insbesondere des Niveauregelkolbens sowohl vereinfacht als auch in seiner Funktionalität optimiert werden kann.

Des Weiteren ist eine maßgebliche, signifikante Reduzierung der Bauraumhöhe des Niveauregelsystems, insbesondere im Bereich des Niveauregelkolbens und des Niveauregelzylinders, erzielbar. So kann die Bauraumhöhe anhand einer integralen Konstruktion der Komponenten auf ungefähr die Hälfte des ursprünglich notwendigen Bauraums eines Hubzylinders verringert werden.

Es sind insbesondere eine platzsparende Konstruktion sowie eine vereinfachte Herstellung des Niveauregelsystems erzielbar. Funktionale Eigenschaften des Niveauregelsystems sind vorzugsweise direkt in der geometrischen Konstruktion des Niveauregelkolbens und/oder des Niveauregelzylinders enthalten bzw. integriert.

Darüber hinaus kann eine vereinfachte Handhabung des Niveauregelsystems nicht nur während des Betriebs, z.B. in Form der in den Niveauregelzylinder integrierten Hydraulikanschlüssen, vorgesehen sein. Vielmehr können auch die Wartung und Instandhaltung des Niveauregelsystems optimiert werden, indem das Niveauregelsystems mit einer geringeren Anzahl an Komponenten sowie leicht zugänglich aufgebaut ist.

Folglich sind die Vorteile eines Niveauregelsystems gemäß der vorliegenden Erfindung nicht nur während der Laufzeit des Niveauregelsystems bemerkbar, sondern auch im Verlauf der Herstellung und Montage sowie der Wartung des Systems, insbesondere im Hinblick auf eine vereinfachte Handhabung des Systems.

Gemäß der vorliegenden Erfindung ist der Niveauregelkolben zumindest teilweise in dem Niveauregelzylinder beweglich, zur Einstellung des Niveaus des Schienenfahrzeugs, vorgesehen.

Der Niveauregelkolben ist, entsprechend einem üblichen Hubzylinder, beweglich innerhalb des Niveauregelzylinders angeordnet.

Vorzugsweise ist der Niveauregelzylinder als hydraulisch betätigbarer Niveauregelzylinder ausgestaltet.

In einem eingefahrenen Zustand des Niveauregelsystems ist der Niveauregelkolben vorzugsweise vollständig innerhalb des Niveauregelzylinders angeordnet bzw. aufgenommen.

Alternativ ist der Niveauregelkolben im eingefahrenen Zustand zumindest teilweise bzw. größtenteils innerhalb des Niveauregelzylinders angeordnet.

In einem ausgefahrenen Zustand des Niveauregelsystems ist der Niveauregelkolben teilweise bzw. größtenteils außerhalb des Niveauregelzylinders angeordnet. Somit wird ein Hub zwischen dem eingefahrenen und dem ausgefahrenen Zustand des Niveauregelsystems bereitgestellt.

Des Weiteren ist vorgesehen, dass der Niveauregelzylinder einen kragenförmigen Absatz aufweist, wobei das Niveauregelsystem eine erste Fixierscheibe aufweist, die mit dem Niveauregelkolben zur Übertragung einer Hubbewegung verbunden ist, wobei zwischen dem kragenförmigen Absatz des Niveauregelzylinders und der ersten Fixierscheibe wenigstens ein Distanzelement angeordnet ist.

Anhand des kragenförmigen Absatzes des Niveauregelzylinders ist zwischen den relativ zueinander bewegbaren Komponenten des Niveauregelsystems, insbesondere dem kragenförmigen Absatz des Niveauregelzylinders und der ersten Fixierscheibe in Verbindung mit dem Niveauregelkolben, ein Arbeitsbereich bzw. ein Arbeitsraum verfügbar.

Der Arbeitsbereich ist insbesondere durch die sich gegenüberstehenden Flächen der kragenförmigen Absätze des Niveauregelzylinders und des Niveauregelkolbens ausgebildet. Die Höhe des Arbeitsbereiches ist dabei abhängig von dem vorliegenden Hub, der durch eine relative Position des Niveauregelkolbens gegenüber dem Niveauregelzylinder eingestellt ist.

Im Sinne der vorliegenden Erfindung ist vorgesehen, in dem Arbeitsbereich zwischen dem kragenförmigen Absatz des Niveauregelzylinders und der ersten Fixierscheibe wenigstens ein Distanzelement anzuordnen.

Auf diese Weise kann ein Mindesthub zwischen dem Niveauregelzylinder und dem Niveauregelkolben einstellbar sein.

Es ist ein Mindestabstand zwischen einem Wagenkasten und einem Fahrzeuggestell eines Schienenfahrzeugs vorbestimmbar.

Vorzugsweise kann das wenigstens eine Distanzelement entlang dem kragenförmigen Absatz des Niveauregelzylinders befestigt sein.

Die Einstellung eines solchen Mindestabstands ist ohne Ausbau der Niveauregeleinrichtung möglich, indem weitere Distanzelemente im zusammengesetzten Zustand des Niveauregelsystems einschiebbar bzw. einfügbar sind.

Aufeinanderliegende Distanzelemente können vorzugsweise aneinander befestigbar sein.

Vorzugsweise können mehrere, insbesondere aufeinander angeordnete Distanzelemente, identisch sein. Alternativ können mehrere Distanzelemente insbesondere unterschiedliche Höhen aufweisen.

Insbesondere im Fehlerfall bzw. bei Ausfall des Niveauregelsystems kann ein Mindestabstand zwischen Fahrzeugkarosserie und Fahrwerk sichergestellt werden, indem mittels wenigstens einer Distanzscheibe ein Mindestabstand voreinstellbar ist.

Darüber hinaus ist ein zu gewährleistender Mindestabstand nachstellbar bzw. adaptierbar sofern beispielsweise Radelemente des Fahrzeugs nachzubearbeiten sind und sich in diesem Zuge die ursprüngliche Höhenlage der Fahrzeugkarosserie verringert.

Anhand des wenigstens einen Distanzelements kann auf vorteilhafte Weise ein Mindestabstand zwischen dem Niveauregelzylinder und dem Niveauregelkolben bedarfsweise einstellbar und für einen Fehlerfall des Niveauregelsystems sicher vorbestimmbar sein.

Nach einer Ausführungsform weist der Niveauregelkolben einen kragenförmigen Absatz in Kontakt mit der ersten Fixierscheibe auf, sodass das wenigstens eine Distanzelement zwischen den kragenförmigen Absätzen des Niveauregelkolbens und des Niveauregelzylinders angeordnet ist.

Für den Fall, dass der Niveauregelkolben einen kragenförmigen Absatz aufweist, kann die Anordnung der ersten Fixierscheibe auf kragenförmigen Absatz entfallen.

In diesem Fall ist sowohl der Niveauregelzylinder als auch der Niveauregelkolben mit einem kragenförmigen Absatz ausgestaltet.

In diesem Sinne ist das wenigstens eine Distanzelement zwischen dem kragenförmigen Absatz des Niveauregelzylinder und der ersten Fixierscheibe angeordnet, insbesondere zwischen den kragenförmigen Absätzen des Niveauregelzylinders und des Niveauregelkolbens.

In diesem Sinne ist ein minimaler Hubweg des Niveauregelsystems begrenzt, wenn sich das wenigstens eine Distanzelement an den kragenförmigen Absätzen des Niveauregelzylinders und des Niveauregelkolbens abstützt.

Auf vorteilhafte Weise ist ein Mindesthubweg bzw. ein Mindestabstand zwischen dem Niveauregelzylinder und dem Niveauregelkolben bzw. der ersten Fixierscheibe sicherstellbar.

Der Niveauregelzylinder und der Niveauregelkolben stützen sich über das wenigstens eine Distanzelement auf vorteilhafte Weise unmittelbar gegeneinander ab.

Zudem kann gemäß des vorstehend beschriebenen Zusammenhangs weiter vorgesehen sein, dass das wenigstens eine Distanzelement an dem kragenförmigen Absatz des Niveauregelkolbens oder des Niveauregelzylinders, der ersten Fixierscheibe oder dem Wagenkasten befestigbar ist. Dadurch wird eine hohe Einsatzvariabilität und ein zweckangepasster Einsatz des Distanzelements sichergestellt.

Gemäß einer weiteren Ausführungsform ist das wenigstens eine Distanzelement mittels wenigstens eines magnetischen Befestigungselements befestigbar oder ist aus einem magnetischen Werkstoff ausgebildet. Durch den magnetischen Verbund des Distanzelements bzw. der Distanzelemente wird eine insbesondere leichte Montage und Demontage des Distanzelements an den entsprechenden Gegenstücken wie vorstehend beschrieben ermöglicht. Das magnetische Befestigungselement kann an dem Distanzelement selbst angebracht sein und/oder an dem entsprechend gekoppelten und zu befestigenden Gegenstück angebracht sein.

Gemäß einer noch weiteren Ausführungsform ist das wenigstens eine Distanzelement als eine Halbsegmentscheibe ausgebildet.

Dabei ist unter einer Halbsegmentscheibe eine Scheibe bzw. Distanzscheibe zu verstehen, die die Grundform eines Kreissegments aufweist.

Grundsätzlich denkbar ist, dass auch teilsegmentartige Distanzelemente gewählt werden können.

So kann das wenigstens eine Distanzelement in Form einer Halbsegmentscheibe im zusammengesetzten und betriebsfertigen Zustand des Niveauregelsystems zwischen dem Niveauregelkolben und dem Niveauregelzylinder einbringbar sein.

Insbesondere kann das halbsegmentscheibenförmige Distanzelement im Betriebszustand des Niveauregelsystems entlang des kragenförmigen Absatzes des Niveauregelzylinders positionierbar und befestigbar sein. Hier kann durch die halbsegmentartige Ausgestaltung des Distanzelements dieses direkt an z.B. den Zylinder angelegt bzw. positioniert werden und zwar ohne ein Auffädeln auf den Zylinder.

Ein Mindesthub bzw. ein Mindestabstand zwischen dem Niveauregelzylinder und dem Niveauregelkolben kann anhand der Distanzelemente in Halbsegmentscheibenform in einem betriebsfertigen Zustand des Niveauregelsystems nachjustierbar sein.

Nach einer weiteren Ausführungsform sind wenigstens zwei Distanzelemente zwischen dem kragenförmigen Absatz des Niveauregelzylinders und der ersten Fixierscheibe symmetrisch verteilt angeordnet.

Gemäß einer noch weiteren Ausführungsform kann in diesem Sinne vorgesehen sein, dass wenigstens zwei Distanzelemente unmittelbar zwischen dem kragenförmigen Absatz des Niveauregelzylinders und dem Wagenkasten des Fahrzeugs, insbesondere Schienenfahrzeugs, symmetrisch angeordnet sind.

Anhand der symmetrischen Anordnung der wenigstens zwei Distanzelemente kann eine gleichmäßige Kraftverteilung entlang des kragenförmigen Absatzes des Niveauregelzylinders, und gegebenenfalls des Niveauregelkolbens, bereitstellbar sein. So kann beispielsweise im Fehlerfall des Niveauregelsystems eine Flächenpressung entlang der kragenförmigen Absätze verringerbar sein.

In diesem Sinne kann insbesondere vorgesehen sein, dass entlang des kragenförmigen Absatzes des Niveauregelzylinders mehr als zwei Distanzelemente symmetrisch verteilt angeordnet sind.

Des Weiteren können die wenigstens zwei Distanzelemente mit einer beliebigen, zweckmäßigen Vielzahl aufeinander gestapelter Distanzelemente vorgesehen sein.

Distanzelemente, die auf dem kragenförmigen Absatz des Niveauregelzylinders aufliegen, sind vorzugsweise mit dem Niveauregelzylinder bzw. dem kragenförmigen Absatz des Niveauregelzylinders verschraubbar, verklemmbar, mittels Magneten fixierbar oder dergleichen.

Aufeinander gestapelte Distanzelemente sind vorzugsweise miteinander verschraubbar, verklemmbar oder dergleichen.

Erfindungsgemäß ist vorgesehen, dass das Niveauregelsystem wenigstens einen Balg aufweist, welcher zwischen dem kragenförmigen Absatz des Niveauregelzylinders und der ersten Fixierscheibe und/oder dem kragenförmigen Absatz des Niveauregelkolbens angeordnet ist.

Zusätzlich oder alternativ kann in diesem Zusammenhang vorgesehen sein, dass gemäß einer weiteren Ausführungsform der Balg zwischen den kragenförmigen Absätzen des Niveauregelzylinders und des Niveauregelkolbens angeordnet ist.

Ferner ist diesbezüglich denkbar, dass der Balg als ein ein- und ausziehbarer Faltenbalg ausgebildet ist, der aus einem Elastomer ausgestaltet ist.

Insbesondere ist der Balg derart zwischen den kragenförmigen Absätzen vorgesehen, sodass die Distanzelemente sowie der Niveauregelzylinder und der Niveauregelkolben vor Verschmutzung oder dergleichen geschützt sind.

Der Balg kann ferner auch unabhängig von den Distanzelementen zwischen den kragenförmigen Absätzen dementsprechend vorgesehen bzw. angeordnet sein.

Der Balg kann vorzugsweise entlang des kragenförmigen Absatzes des Niveauregelzylinders und/oder des Niveauregelkolbens bzw. entlang der ersten Fixierscheibe angeordnet und befestigbar sein. So ist der Balg im Zuge einer Hubbewegung des Niveauregelsystems mitführbar sowie sicher positionierbar.

Erfindungsgemäß weist der kragenförmige Absatz des Niveauregelzylinders und/oder der kragenförmige Absatz des Niveauregelkolbens eine Aufnahmenut auf, zur Aufnahme des Balgs.

Gemäß noch einer weiteren Ausführungsform kann auch die erste Fixierscheibe eine Aufnahmenut zur Aufnahme des Balgs aufweisen.

Insbesondere kann die Aufnahmenut entlang des jeweiligen kragenförmigen Absatzes als eine umlaufende Aufnahmenut ausgestaltet sein.

Der Balg kann mit einer Wulst oder dergleichen ausgestaltet sein, um einen sicheren Eingriff in die Aufnahmenut des Niveauregelzylinders zu gewährleisten.

So ist der Balg entlang des Niveauregelzylinders sicher aufnehmbar und positionierbar, auch im Zuge einer Relativbewegung zwischen dem Niveauregelzylinder und der ersten Fixierscheibe bzw. dem Niveauregelkolben.

Erfindungsgemäß ist vorgesehen, dass der Balg ein Versteifungselement derart aufweist, dass der Balg in der Aufnahmenut des Niveauregelzylinders lösbar und drehbar fixiert ist.

Ferner kann in diesem Zusammenhang vorgesehen sein, dass der Balg in der Aufnahmenut des Niveauregelzylinders und des Niveauregelkolbens lösbar und drehbar fixiert ist.

Gemäß einer erfindungsgemäßen Alternative ist entlang einem Umfang des Balgs ein Versteifungselement derart integriert vorgesehen sein, dass der Balg sicher in der Aufnahmenut des Niveauregelzylinders und des Niveauregelkolbens fixierbar ist.

In diesem Sinne ist das Versteifungselement vorzugsweise in dem Balg bzw. Balgmaterial eingesetzt. Insbesondere ist das Versteifungselement von außen nicht sichtbar in dem Balg angeordnet.

Das Versteifungselement kann als ein einteiliger Ring ausgestaltet sein. Alternativ kann das Versteifungselement aus einer Vielzahl an Einzelelementen bestehen.

Das Versteifungselement ist derart ausgestaltet, sodass eine zweckmäßige Formstabilität des Balgs zum Eingriff in die Aufnahmenut des Niveauregelzylinders und des Niveauregelkolbens erzielbar ist.

Anhand des Formelements ist eine zweckmäßige, lokale Versteifung des Balgs bereitstellbar. So kann der Balg sicher in die Aufnahmenut des Niveauregelzylinders und des Niveauregelkolbens eingreifen.

Auf diese Weise wird anhand des Versteifungselements eine integrierte Versteifungsfunktion zur Stabilisierung des Balgs sowie eine integral ausgestaltete Sicherungsfunktion bereitgestellt.

Das Versteifungselement kann insbesondere ein vulkanisierter Metallring sein oder ein vergleichbares, zweckmäßig einsetzbares Material im Kontext eines Fahrzeuges, insbesondere eines Schienenfahrzeuges.

Nach einer Ausführungsform weist das Niveauregelsystem ein einzelnes, insbesondere zentral angeordnetes, Befestigungselement auf, zur Verbindung des Niveauregelkolbens mit dem Niveauregelzylinder.

So ist das Niveauregelsystems vorzugsweise anhand eines einzelnen Befestigungselements zweckmäßig zusammensetzbar, insbesondere der Niveauregelkolben und der Niveauregelzylinder.

Demnach kann das Niveauregelsystem auf einfache und schnelle Weise zusammensetzbar bzw. zerlegbar sein. Es ist eine Reduktion von Einzelbauteilen zur Ausgestaltung des Niveauregelsystems erzielbar.

Insbesondere kann das Befestigungselement als eine Schraube, ein Bolzen, ein Haken, ein Magnet, ein Seil, ein Klebstoff oder dergleichen ausgestaltet sein.

Bevorzugter Weise ist das einzelne Befestigungselement zentral, insbesondere entlang einer Längsachse des Niveauregelzylinders bzw. des Niveauregelkolbens, angeordnet.

Die Längsachse kann im Sinne der vorliegenden Erfindung als gemeinsame Längsachse des Niveauregelzylinders und des Niveauregelkolbens aufgefasst werden, wobei eine Hubbewegung des Niveauregelkolbens entlang der Längsachse erfolgt.

Mittels eines einzigen Befestigungselements ist ein geringer Montageaufwand bzw. Wartungsaufwand für das Niveauregelsystem erforderlich.

Des Weiteren ist eine gleichmäßige Verbindungskraft bzw. Flächenpressung im Zuge der zweckmäßigen Verbindung des Niveauregelkolbens mit dem Niveauregelzylinder zur Bereitstellung eines geeigneten Hubzylinders erzielbar.

Anhand des Befestigungselementes ist eine zweckmäßige Verbindung zwischen dem Niveauregelzylinder und dem Niveauregelkolben bereitstellbar, wobei eine bewegbare Aufnahme des Niveauregelkolbens sichergestellt ist.

Vorzugsweise ist eine bewegliche Aufnahme des Niveauregelkolbens in dem Niveauregelzylinder im Rahmen eines vorbestimmbaren Hubweges des Niveauregelsystems vorbestimmbar.

Gemäß einer weiteren Ausführungsform weisen der Niveauregelzylinder und der Niveauregelkolben jeweils eine zentrale Bohrung zur Aufnahme des Befestigungselementes auf, wobei die zentrale Bohrung des Niveauregelkolbens als eine Durchgangsbohrung ausgestaltet ist.

Indem sowohl der Niveauregelkolben als auch der Niveauregelzylinder mit einer zentralen Bohrung für das Befestigungselement ausgestaltet sind, ist eine mittig zentrale Anordnung des Befestigungselementes verfügbar.

Anhand der zentralen Anordnung des Befestigungselementes ist eine gleichmäßige Kraftverteilung zur Verbindung des Niveauregelzylinders mit dem Niveauregelkolben gewährleistet.

Des Weiteren kann anhand der zentralen Anordnung des Befestigungselementes eine Verbindung des Niveauregelzylinders mit dem Niveauregelkolben durch ein einzelnes Befestigungselement zweckmäßig erfolgen.

Es kann eine Reduktion der Anzahl an Einzelteilen des Niveauregelsystems zur Erzielung eines vereinfachten Zusammenbaus sowie einer vereinfachten Instandhaltung bereitgestellt werden.

Nach einer Ausführungsform ist vorgesehen, dass die zentrale Bohrung des Niveauregelkolbens einen variierenden Durchmesser aufweist.

Insbesondere kann sich der Durchmesser der zentralen Bohrung des Niveauregelkolbens entlang eines Abschnittes der Längserstreckung verkleinern oder vergrößern.

Vorzugsweise verkleinert sich der Durchmesser der zentralen Bohrung des Niveauregelkolbens derart, dass ein Befestigungselement wenigstens teilweise durch den verkleinerten Durchmesser hindurchragen kann.

Des Weiteren ist vorgesehen, dass das Befestigungselement wenigstens teilweise durch den verkleinerten Durchmesser hindurch und aus dem Niveauregelkolben hinausragen kann.

So ist eine Verbindung mit der zentralen Bohrung des Niveauregelzylinders bereitstellbar.

Nach einer weiteren Ausführungsform ist der variierende Durchmesser entlang der zentralen Bohrung des Niveauregelkolbens zum Zusammenwirken mit dem Befestigungselement vorgesehen, sodass eine Relativbewegung zwischen dem Niveauregelkolben und dem Niveauregelzylinder begrenzbar ist.

Insbesondere stellt der Vorsprung eine abschnittsweise Verkleinerung des Durchmessers der zentralen Bohrung des Niveauregelkolbens bereit.

Vorzugsweise ist vorgesehen, dass der Vorsprung, als verkleinerter Durchmesser, mit einem Kopf oder dergleichen des Befestigungselementes in Eingriff kommt. So ist ein Anschlag für den Niveauregelkolben verfügbar.

Ein maximaler Hub des Niveauregelkolbens ist erreicht, sobald vorzugsweise der Kopf des Befestigungselementes, wie einer Schraube, einer Niete oder dergleichen, mit dem Vorsprung entlang der zentralen Bohrung des Niveauregelkolbens in Kontakt kommt.

Auf diese Weise ist ein Anschlag für eine maximale, begrenzte Hubbwegung bzw. Relativbewegung zwischen Niveauregelkolben und Niveauregelzylinder anhand einer integralen Konstruktion des Niveauregelkolbens bereitstellbar.

Gemäß einer weiteren Ausführungsform ist in der zentralen Bohrung des Niveauregelkolbens ein Verschlusselement zur Abdichtung eines Innendurchmessers des Niveauregelzylinders angeordnet.

Anhand des Verschlusselementes kann ein Austreten von Hydraulikfluid aus einem Innendurchmesser des Niveauregelzylinders, zur Bereitstellung eines Hubs des Niveauregelsystems, vorgebeugt werden.

Insbesondere kann das Verschlusselement selbst eine Dichtwirkung bereitstellen oder ein zusätzliches Dichtelemente wie einen O-Ring in Verbindung mit einer korrespondierenden Nut oder dergleichen aufweisen.

Nach einer Ausführungsform weist das Verschlusselement eine Durchgangsbohrung auf, zur Verbindung wenigstens eines ersten Hydraulikanschlusses des Niveauregelkolbens mit dem Innendurchmesser des Niveauregelzylinders.

Der erste Hydraulikanschluss kann anhand eines zugehörigen ersten Fluidkanals derart mit der zentralen Bohrung des Niveauregelkolbens verbunden sein, dass ein Hydraulikfluid bzw. Druckfluid zur Bereitstellung eines Hubes des Niveauregelsystems zuleitbar oder ableitbar ist.

Im Sinne einer möglichst kompakten Bauweise ist vorgesehen, dass das Verschlusselement anhand einer Durchgangsbohrung eine Verlängerung des wenigstens einen Fluidkanals bereitstellen kann.

So kann das Verschlusselement über den ersten Fluidkanal hinweg in die zentrale Bohrung des Niveauregelkolbens hineinragen.

Es ist ein sicherer Verschluss der zentralen Bohrung und des Innendurchmessers des Niveauregelzylinders, gefüllt mit Hydraulikfluid, bereitstellbar.

Des Weiteren kann im Sinne der vorliegenden Erfindung wenigstens ein weiterer, zweiter Hydraulikanschluss in Verbindung mit einem zweiten Fluidkanal vorgesehen sein.

Gemäß einer weiteren Ausführungsform ist entlang dem kragenförmigen Absatz des Niveauregelkolbens oder des Niveauregelzylinders wenigstens ein erster Ansatz zur Aufnahme des ersten Hydraulikanschlusses vorgesehen ist, wobei der erste Ansatz bezogen auf eine Längsachse des Niveauregelzylinders oder des Niveauregelkolbens tangential an dem kragenförmigen Absatz angeordnet ist, sodass wenigstens eine externe Fluidverbindung tangential an dem kragenförmigen Absatz mit dem wenigstens einen ersten Hydraulikanschluss verbindbar ist.

Es ist wenigstens ein erster Ansatz entlang des kragenförmigen Absatzes vorgesehen, an den bzw. in dem der erste Hydraulikanschluss angeformt bzw. aufgenommen ist.

Bezogen auf die Längsachse des Niveauregelzylinders kann anhand des Ansatzes der erste Hydraulikanschluss aufgenommen und insbesondere entlang dem Außendurchmesser des kragenförmigen Absatzes des Niveauregelkolbens oder des Niveauregelzylinders tangential verlaufend positioniert bzw. angeordnet sein.

Indem der erste Hydraulikanschluss anhand des ersten Ansatzes tangential an dem kragenförmigen Absatz des Niveauregelzylinders oder des Niveauregelkolbens angeordnet und ausgebildet ist, kann eine externe Fluidverbindung tangential an dem kragenförmigen Absatz mit dem wenigstens einen ersten Hydraulikanschluss verbindbar sein.

So kann eine integrale und platzsparende Anordnung des wenigstens einen ersten Hydraulikanschlusses bereitgestellt werden.

Im Falle der Anordnung entlang dem kragenförmigen Absatz des Niveauregelzylinders ist insbesondere ein Abreißen der externen Fluidverbindung von dem ersten Hydraulikanschluss verhinderbar, insbesondere im Vergleich zu einer Anordnung des Hydraulikanschlusses an dem Niveauregelkolben.

Darüber hinaus kann im Sinne der vorliegenden Erfindung bevorzugter Weise wenigstens ein zweiter Ansatz zur Anformung bzw. Aufnahme eines zweiten Hydraulikanschlusses an dem kragenförmigen Absatz des Niveauregelkolbens oder des Niveauregelzylinders vorgesehen sein.

Des Weiteren kann der wenigstens eine erste Ansatz als eine Aussparung an dem kragenförmigen Absatzes ausgebildet, sodass der erste Hydraulikanschluss an dem ersten Ansatz angeordnet sein kann bzw. ist.

Der Ansatz kann als eine Aussparung bzw. eine Ausfräsung zur Aufnahme des ersten Hydraulikanschlusses ausgebildet sein.

Bevorzugter Weise ist der erste Hydraulikanschluss an dem ersten Ansatz zweckmäßig angeformt.

Darüber hinaus kann vorgesehen sein, dass der wenigstens eine erste Ansatz als eine Hervorhebung, die über den Außendurchmesser des kragenförmigen Absatzes hinausragt, ausgebildet ist, sodass der erste Hydraulikanschluss an einer Außenseite des kragenförmigen Absatzes tangential zu dem Außendurchmesser des kragenförmigen Absatzes angeordnet sein kann bzw. ist.

Insbesondere kann der erste Hydraulikanschluss in der Hervorhebung des ersten Ansatzes aufgenommen, sodass der erste Hydraulikanschluss positioniert und gestützt bzw. getragen ist.

Im Sinne der vorliegenden Erfindung kann anhand des ersten Hydraulikanschlusses und dem ersten Ansatz entlang der kreisförmigen Grundgeometrie des kragenförmigen Absatzes eine tangential ausgerichtete Anbindung einer externen Fluidverbindungen erfolgen.

Des Weiteren kann im Sinne der vorliegenden Erfindung ein zweiter Ansatz sowie ein zweiter Hydraulikanschluss identisch zu dem ersten Ansatz bzw. ersten Hydraulikanschluss vorgesehen sein.

Vorzugsweise sind der erste und zweite Hydraulikanschluss bzw. Ansatz symmetrisch verteilt entlang dem kragenförmigen Absatz angeordnet.

Vorzugsweise ist der wenigstens eine erste Hydraulikanschluss mit dem wenigstens einen ersten Ansatz des kragenförmigen Absatzes kraft- und/oder formschlüssig verbunden.

Insbesondere kann der erste Hydraulikanschluss mit dem ersten Ansatz des kragenförmigen Absatzes verschweißt, verklebt, verschraubt, ver- bzw. aufgeklemmt, in den Ansätzen und eingepresst sein oder dergleichen.

Der erste Hydraulikanschluss kann in diesem Sinne einteilig oder mehrteilig mit dem kragenförmigen Absatz des Niveauregelkolbens oder des Niveauregelzylinders ausgebildet sein.

Im Allgemeinen ist anhand der integralen Konstruktion insbesondere des Niveauregelkolbens ein einfach und platzsparend aufgebautes, sicher verwendbares und vorteilhaft in Stand zu haltendes Niveauregelsystem bereitgestellt.

Weitere Einzelheiten und Vorteile der Erfindung sollen nun anhand von in den Zeichnungen näher dargestellten Ausführungsbeispielen erläutert werden.

Es zeigen:
- Fig. 1: eine schematische Frontalansicht eines erfindungsgemäßen Ausführungsbeispiels eines Niveauregelsystems mit einem Niveauregelzylinder und einem Niveauregelkolben im teilweise eingefahrenen Zustand;
- Fig. 2: eine schematische Schnittansicht des erfindungsgemäßen Ausführungsbeispiels nach Fig. 1; und
- Fig. 3: eine schematische Detailansicht des erfindungsgemäßen Ausführungsbeispiels nach Fig. 1 mit einem Balg, befestigt an dem Niveauregelzylinder.

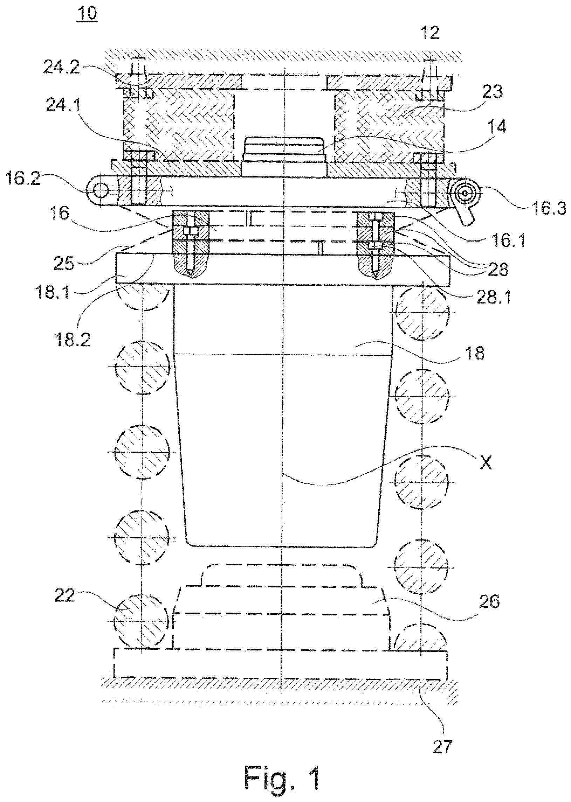

Fig. 1 zeigt eine Frontalansicht eines Ausführungsbeispiels eines Niveauregelsystems 10 mit einem Niveauregelzylinder 18 und einem Niveauregelkolben 16 im teilweise eingefahrenen Zustand.

Das Niveauregelsystem 10 ist nach Fig. 1 an einem Fahrzeug bzw. einem Schienenfahrzeug bzw. einem Wagenkasten 12 eines Schienenfahrzeugs vorgesehen.

Innerhalb des Niveauregelzylinders 18 ist der Niveauregelkolben 16 angeordnet.

Der Niveauregelkolben 16 befindet sich in Fig. 1 nahe einer Endposition, in der vorgegebene minimale Bauhöhe des Niveauregelsystems 10 gegeben ist.

Das Niveauregelsystem ist mit einer ersten Fixierscheibe 24.1, einer zweiten Fixierscheibe 24.2 sowie einer dazwischenliegenden Schichtfeder 23 ausgestaltet.

Die Schichtfeder 23 ist als eine ringförmige Schichtfeder vorgesehen.

Anhand der zweiten Fixierscheibe 24.2 ist das Niveauregelsystem an dem Schienenfahrzeug bzw. dem Wagenkasten 12 eines Schienenfahrzeugs befestigt.

Des Weiteren ist ein Verschlusselement 14 vorgesehen.

Das Verschlusselement 14 ragt in den Niveauregelkolben 16 hinein.

Das Verschlusselement 14 ist zentral in dem Niveauregelsystem 10, insbesondere dem Niveauregelkolben 16 angeordnet.

Der Kopf des Verschlusselements 14 ist innerhalb der ringförmigen Schichtfeder 23 positioniert.

So ist eine platzsparende Anordnung des Verschlusselements 14 bereitstellbar.

Der Niveauregelzylinder 18 ist mit einer offenen Zylinderseite 18.2 ausgestaltet, aus der der Niveauregelkolben 16 hinausragen bzw. hinausgleiten kann. So ist ein Hub bzw. eine Höhenverstellung des Niveauregelsystems 10 erzielbar.

Des Weiteren weist der Niveauregelzylinder 18 einen kragenförmigen Absatz 18.1 entlang der offenen Zylinderseite 18.2 auf.

Der kragenförmige Absatz bzw. Umfang 18.1 des Niveauregelzylinders 18 ist als ein Absatz gegenüber der zylinderförmigen Grundform des Niveauregelzylinders 18 ausgestaltet.

Ebenso weist der Niveauregelkolben 16 gemäß Fig. 1 einen kragenförmigen Absatz 16.1 entlang demjenigen Ende auf, das aus dem Niveauregelzylinder 18 herausragt.

Zwischen dem kragenförmigen Absatz 18.1 des Niveauregelzylinders 18 und der ersten Fixierscheibe 24.1 bzw. dem kragenförmigen Absatz 16.1 des Niveauregelkolbens 16 ist ein Balg 25 angeordnet.

Der Balg 25 ist derart zwischen den kragenförmigen Absätzen 16.1 und 18.1 ausgestaltet, dass das Niveauregelsystem 10, insbesondere der Niveauregelzylinder 18 und der Niveauregelkolben 16, vor Verschmutzung geschützt sind.

Zwischen den kragenförmigen Absätzen 16.1 und 18.1 des Niveauregelkolbens 16 und des Niveauregelzylinders sind Distanzelemente 28 symmetrisch zueinander angeordnet.

In diesem Sinne kann gemäß eines weiteren Ausführungsbeispiels vorgesehen sein, dass die Distanzelemente 28 unmittelbar zwischen dem kragenförmigen Absatz 18.1 des Niveauregelzylinders 18 und dem Wagenkasten 12 des Schienenfahrzeugs symmetrisch angeordnet sind.

Ferner ist denkbar, dass die Distanzelemente 28 zwischen der ersten Fixierscheibe 24.1 oder dem kragenförmigen Absatz 16.1; 18.1 des Niveauregelkolbens 16 oder des Niveauregelzylinders 18 und des Wagenkastens 12 symmetrisch verteilt angeordnet sind (nicht in Fig. 1 gezeigt).

Gemäß eines weiteren Ausführungsbeispiels (nicht in Fig. 1 gezeigt) kann vorgesehen sein, dass unmittelbar zwischen dem kragenförmigen Absatz 18.1 des Niveauregelzylinders 18 und einem Wagenkasten 12 Schienenfahrzeugs 10 das wenigstens eine Distanzelement 28 bzw. die Distanzelemente 28 angeordnet sind. Das Distanzelement bzw. die Distanzelemente 28 befinden sich in diesem Fall in einem Zwischenraum, der den kragenförmigen Absatz 18.1 des Niveauregelzylinders 18 und den Wagenkasten 12 direkt miteinander verbindet.

Vorzugsweise sind die Distanzelemente 28 in einem Arbeitsbereich bzw. einem Arbeitsraum angeordnet, der durch die kragenförmigen Absätze 16.1 und 18.1 des Niveauregelkolbens 16 und des Niveauregelzylinders 18 bzw. die erste Fixierscheibe 24.1 ausgebildet ist.

Insbesondere sind jeweils drei aufeinander gestapelte Distanzelemente 28 vorgesehen.

Vorzugsweise ist das unterste Distanzelemente 28 mit dem kragenförmigen Absatz 18.1 des Niveauregelzylinders 18 verbindbar, insbesondere anhand von Fixierelementen 28.1.

Die aufeinander gestapelten Distanzelemente 28 sind vorzugsweise untereinander verbindbar, vorzugsweise ebenso mit Fixierelementen 28.1.

Fixierelemente 28.1 können in diesem Sinne Schrauben, Nieten, Sicherungsstifte, magnetische Elemente oder dergleichen sein.

Es kann eine zweckmäßige Befestigung und Positionierung der Distanzelemente 28 entlang des kragenförmigen Absatzes 18.1 des Niveauregelzylinders 18 bereitgestellt werden.

Anhand der Distanzelemente 28 zwischen den kragenförmigen Absätzen 16.1 und 18.1 ist ein Mindesthub bzw. Mindestabstand zwischen dem Niveauregelkolben 16 und dem Niveauregelzylinder 18 vorbestimmbar.

Vorzugsweise sind die Distanzelemente 28 als Halbsegmentscheiben ausgestaltet.

So sind die Distanzelemente 28 auch im zusammengesetzten und einsatzbereiten Zustand des Niveauregelsystems 10 zwischen die kragenförmigen Absätzen 16.1 und 18.1 des Niveauregelkolbens 16 und des Niveauregelzylinders 18 einführbar.

Die Distanzelemente 28 sind dabei an dem kragenförmigen Absatz 16.1; 18.1 des Niveauregelkolbens 16 oder des Niveauregelzylinders 18 oder der ersten Fixierscheibe 24.1 befestigbar. oder dem Wagenkasten (12) befestigbar ist.

Zusätzlich kann vorgesehen sein, dass die Distanzelemente 28 an dem Wagenkasten 12 befestigbar sind.

In diesem Zusammenhang ist ferner denkbar, dass die Distanzelemente 28 alternativ oder zusätzlich jeweils mittels wenigstens eines magnetischen Befestigungselements untereinander und an den entsprechenden vorstehend erläuterten Befestigungsstellen befestigbar sind.

Das magnetische Befestigungselement ist diesbezüglich an den Befestigungsstellen und/oder an dem Distanzelement 28 angebracht.

Im Übrigen ist denkbar, dass die Distanzelemente 28 aus einem magnetischen Werkstoff ausgebildet sind.

Eine Nachjustierung der Mindesthubhöhe durch Hinzufügung oder Entnahme von Distanzelementen 28 ist in vorteilhafter Ausführungsform zu jedem Zeitpunkt möglich. Nach Fig. 1 ist der Niveauregelkolben 16 teilweise ausgefahren und befindet sich nahe einer Endposition, die den minimalen Hub des gezeigten Niveauregelsystems 10 kennzeichnet.

So ist ein minimaler Hub bzw. Mindesthub des Niveauregelsystems gemäß Fig. 1 anhand der Distanzelemente 28 beliebig vorgebbar.

Entlang des kragenförmigen Absatzes 16.1 des Niveauregelkolbens 16 sind darüber hinaus ein erster und ein zweiter Hydraulikanschluss 16.2 und 16.3 angeordnet.

Insbesondere sind die Hydraulikanschlüsse 16.2 und 16.3 tangential an dem kragenförmigen Absatz 16.1 des Niveauregelkolbens 16 angeformt vorgesehen.

Insbesondere sind Ansätze entlang des kragenförmigen Absatzes 16.1 des Niveauregelkolbens 16 vorgesehen, an die bzw. in denen der erste und zweite Hydraulikanschluss 16.2 und 16.3 angeformt bzw. aufgenommen sind.

Die Ansätze können als Aussparung bzw. Ausfräsung zur Aufnahme des ersten und zweiten Hydraulikanschlusses 16.2 und 16.3 ausgebildet sein.

Gemäß Fig. 1 sind die Ansätze derart vorgesehen, dass sie über den Außendurchmesser des kragenförmigen Absatzes 16.1 hinausragen.

So können der erste und zweite Hydraulikanschluss 16.2 und 16.3 in den Ansätzen aufnehmbar, einsetzbar und positionierbar.

Hinsichtlich der Längsachse X des Niveauregelkolbens 16 können anhand des ersten und zweiten Ansatzes die Hydraulikanschlüsse 16.2 und 16.3 an dem kragenförmigen Absatz 16.1, insbesondere an dem kreisförmigen Außendurchmesser des kragenförmigen Absatzes 16.1, tangential verlaufend positioniert sein.

Bezogen auf den scheibenförmigen Grundkörper des kragenförmigen Absatzes 16.1 und/oder die Längsachse X des Niveauregelkolbens 16 schließen sich der erste und zweite Hydraulikanschluss 16.2 und 16.3 tangential an den kragenförmigen Absatz 16.1 an.

In der Folge können externe Fluidleitungen in vorteilhafter Weise tangential mit dem Niveauregelkolben 16, insbesondere mit dem ersten und zweiten Hydraulikanschluss 16.2 und 16.3, strömungsmäßig verbunden sein.

Die Hydraulikanschlüsse 16.2 und 16.3 können mit den Ansätzen des kragenförmigen Absatzes 16.1 kraft- und/oder formschlüssig verbunden sein.

Insbesondere können die Hydraulikanschlüsse 16.2 und 16.3 mit den Ansätzen des kragenförmigen Absatzes 16.1 verschweißt, verklebt, verschraubt, ver- bzw. aufgeklemmt, in den Ansätzen eingepresst sein oder dergleichen.

Der erste und zweite Hydraulikanschluss 16.2 und 16.3 können einteilig oder mehrteilig mit dem kragenförmigen Absatz 16.1 des Niveauregelkolbens ausgebildet sein.

Die Hydraulikanschlüsse 16.2 und 16.3 sind im Sinne der vorliegenden Erfindung stets derart ausgestaltet und angeordnet, dass externe Fluidleitungen in tangentialer Form mit dem Niveauregelsystem 10 verbindbar sind.

Der erste Hydraulikanschluss 16.2 kann als ein Zulauf bzw. Fluideingang vorgesehen sein.

Der zweite Hydraulikanschluss 16.3 kann als ein Ablauf bzw. Fluidausgang oder als ein Ablassventil ausgestaltet sein.

In diesem Sinne ist auch eine Ausgestaltung des zweiten Hydraulikanschluss 16.3 als ein Überdruckventil vorstellbar.

Des Weiteren können der erste und zweite Hydraulikanschluss 16.2 und 16.3 hinsichtlich ihrer Funktion invertiert einsetzbar sein.

Auch ist es vorstellbar, dass einer der Hydraulikanschlüsse 16.2 und 16.3 sowohl als Fluideingang und Fluidausgang eingesetzt wird, während der andere beispielsweise als ein Überdruckventil einsetzbar ist.

Die Ausgestaltung des kragenförmigen Absatzes bzw. Umfangs 16.1, insbesondere die Schichtdicke des Absatzes 16.1, orientiert sich insbesondere an der Größe des ersten und zweiten Hydraulikanschlusses 16.2 und 16.3.

So kann der kragenförmigen Absatz 16.1 in Abhängigkeit von den anwendungsspezifischen Erfordernissen mit einer beliebigen Kragendicke ausgebildet sein.

Maßgeblich für die vorgesehene Dicke des kragenförmigen Absatzes 16.1 sind insbesondere die Ausgestaltung des ersten und zweiten Hydraulikanschlusses 16.2 und 16.3.

Auf diese Weise ist eine bauraumsparende Ausgestaltung des Niveauregelsystems 10, und insbesondere des Niveauregelkolbens 16, bereitstellbar.

Des Weiteren ist das Niveauregelsystem 10 nach Fig. 1 über einen Anschlagpuffer 26 mit einem Fahrwerk 27 verbunden.

Zwischen dem Anschlagpuffer 26 und dem Niveauregelzylinder 18 ist eine Spiralfeder 22 angeordnet.

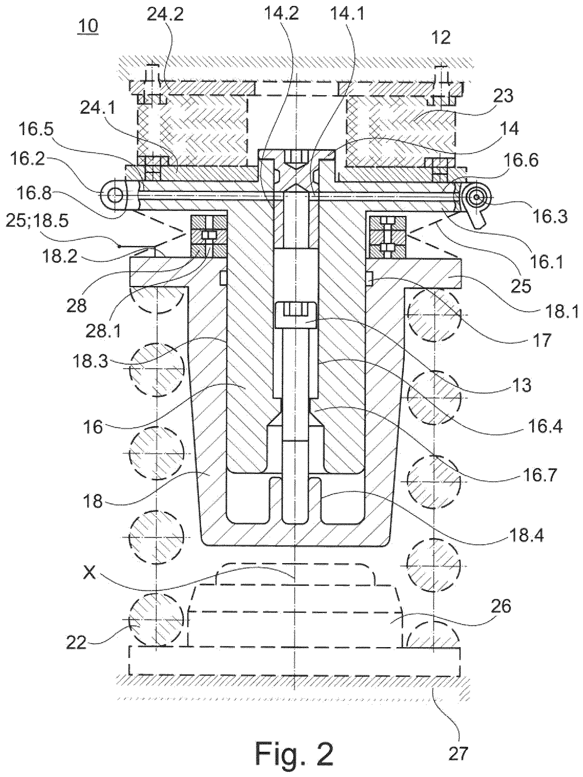

Fig. 2 zeigt eine Schnittansicht des Ausführungsbeispiels nach Fig. 1.

Gegenüber der Darstellung aus Fig. 1 geht aus Fig. 2 zusätzlich die innere Struktur des Niveauregelkolbens 16 sowie des Niveauregelzylinders 18 hervor.

Der Niveauregelkolben 16 ist mit einem im Wesentlichen konstanten bzw. gleichmäßigen Außendurchmesser über seine gesamte Längserstreckung ausgestaltet, abgesehen von dem kragenförmigen Absatz 16.1.

Der Niveauregelkolben 16 ist in einem Innendurchmesser 18.3 des Niveauregelzylinders 18 bewegbar aufgenommen.

Des Weiteren weisen der Niveauregelkolben 16 und der Niveauregelzylinder 18 jeweils eine zentrale Bohrung 16.4 und 18.4 auf, in der ein Befestigungselement 13 aufgenommen ist.

Die Bohrung 18.4 des Niveauregelzylinders 18 ist als eine Hervorhebung entlang des Bodens des Innendurchmessers 18.3 des Niveauregelzylinders 18 ausgeformt.

Gemäß Fig. 2 ist das Befestigungselement 13 als eine Schraube mit einem Schraubenkopf ausgestaltet.

Die zentrale Bohrung 18.4 des Niveauregelzylinders 18 weist wenigstens teilweise ein Innengewinde zur Verschraubung des Befestigungselements 13 auf.

Die zentrale Bohrung 16.4 des Niveauregelkolbens 16 ist mit einem variierenden Durchmesser ausgestaltet, indem ein Vorsprung abschnittsweise entlang der zentralen Bohrung 16.4 ausgebildet ist.

Der Vorsprung 16.7 stellt einen Anschlag insbesondere für einen Kopf des Befestigungselementes 13 dar.

So wird eine relative Bewegung des Niveauregelkolbens 16 gegenüber dem Niveauregelzylinder 18 mit Hilfe des Befestigungselements 13 und dem Vorsprung 16.7 bzw. dem variierenden Durchmesser der zentralen Bohrung 16.4 begrenzt.

Im Sinne der vorliegenden Erfindung ist eine bewegbare Aufnahme bzw. Verbindung des Niveauregelkolbens 16 mit dem Niveauregelzylinder 18 anhand des Befestigungselementes 13 und der zentralen Bohrungen 16.4 und 18.4 erzielbar.

Ein maximaler Hub des Niveauregelkolbens 16 ist in diesem Sinne anhand des variierenden Durchmessers der zentralen Bohrung 16.4 des Niveauregelkolbens 16 und des Befestigungselements 13 vorbestimmt.

Des Weiteren ist lediglich ein einzelnes, zentral angeordnetes Befestigungselement 13 vorgesehen, um die zweckmäßige Verbindung zwischen dem Niveauregelzylinder 18 und dem Niveauregelkolben 16 bereitstellen zu können.

Anhand eines Verschlusselementes 14 ist die zentrale Bohrung 16.4 des Niveauregelkolbens 16 verschlossen.

Nach Fig. 2 weist das Verschlusselement 14 einen O-Ring mit einer korrespondierenden Nut auf.

So ist die zentrale Bohrung 16.4 bzw. ein Innendurchmesser 18.3 des Niveauregelzylinders 18 gegenüber der umgebenden Atmosphäre abgedichtet.

Des Weiteren ist entlang des Innendurchmessers des Niveauregelzylinders 18 eine Zylinderdichtung 17 vorgesehen.

Die Zylinderdichtung 17 ist als ein O-Ring ausgestaltet.

Alternativ kann die Zylinderdichtung 17 als eine beliebige Dichtmasse bzw. als eine ringförmige Dichtmasse mit beliebigem Querschnitt ausgestaltet sein. Die Dichtung kann auch durch Aufvulkanisieren bereitgestellt bzw. realisiert werden.

Die Zylinderdichtung 17 ist gemäß Fig. 2 in einer Dichtungsnut entlang des Innendurchmessers 18.3 des Niveauregelzylinders 18 aufgenommen.

Die Zylinderdichtung 17 ermöglicht ein Abdichten des Innendurchmessers 18.3 des Niveauregelzylinders 18 gegenüber dem Außendurchmesser des Niveauregelkolbens 16.

Im Sinne der vorliegenden Erfindung kann alternativ vorgesehen sein, dass der Niveauregelkolben 16 eine Dichtungsnut aufweist, in dem die Zylinderdichtung 17 angeordnet ist.

Allgemein ist die Zylinderdichtung 17 derart ausgestaltet und entlang der Gleitflächen des Niveauregelkolbens 16 oder des Niveauregelzylinders 18 angeordnet.

So ist eine Abdichtung des Innendurchmessers 18.3 des Niveauregelzylinders 18 gegenüber der äußeren Atmosphäre bzw. der atmosphärischen Umgebung bereitstellbar.

Anhand der Zylinderdichtung 17 ist in dem Innendurchmesser 18.3 des Niveauregelzylinders 18 bedarfsweise ein hydrostatischer Druck einstellbar, der über oder unter dem das Niveauregelsystem 10 umgebenden Luftdruck bzw. Atmosphärendruck liegt.

Gemäß der gezeigten Schnittdarstellung nach Fig. 2 sind der erste und zweite Hydraulikanschluss 16.2 und 16.3 tangential entlang dem kragenförmigen Absatz 16.1 des Niveauregelkolbens 16 angeordnet.

Der erste Hydraulikanschluss 16.2 ist über einen ersten Fluidkanal 16.5 und die zentrale Bohrung 16.4 des Niveauregelkolbens 16 mit dem Innendurchmesser 18.3 des Niveauregelzylinders 18 strömungsmäßig verbunden.

Der zweite Hydraulikanschluss 16.3 ist über einen zweiten Fluidkanal 16.6 und die zentrale Bohrung 16.4 des Niveauregelkolbens 16 mit dem Innendurchmesser 18.3 des Niveauregelzylinders 18 strömungsmäßig verbunden.

Der erste und zweite Fluidkanal 16.5 und 16.6 sind integral mit dem Niveauregelkolben 16 ausgestaltet.

Insbesondere sind der erste und zweite Fluidkanal 16.5 und 16.6 in dem kragenförmigen Absatz 16.1 des Niveauregelkolbens 16 integriert.

So erstrecken sich der erste und zweite Fluidkanal 16.5 und 16.6 gemäß Fig. 2 von den Hydraulikanschlüssen 16.2 und 16.3 aus entlang des kragenförmigen Absatzes 16.1 in horizontaler Richtung bzw. orthogonal zur Längsachse X des Niveauregelkolbens 16.

Gemäß Fig. 2 ragt das Verschlusselement 14 über die Fluidkanäle 16.5 und 16.6 hinaus in die zentrale Bohrung 16.4 des Niveauregelkolbens 16 hinein.

Zur Bereitstellung einer strömungsmäßigen Verbindung der Fluidkanäle 16.5 und 16.6 in die zentrale Bohrung 16.4 weist das Verschlusselement 14 eine Durchgangsbohrung 14.1 auf, die fluchtend zu den Fluidkanälen 16.5 und 16.6 ausgerichtet ist.

Alternativ kann das Verschlusselement 14 beispielsweise mit einer zusätzlichen umfangsseitigen Nut 14.2 vorgesehen sein, sodass eine strömungsmäßige Verbindung zwischen den Fluidkanälen 16.5 und 16.6 und der zentralen Bohrung 16.4 des Niveauregelkolbens 16 bereitstellbar ist.

Dadurch ist eine Ausrichtung der Durchgangsbohrung 14.1 zu den Fluidkanälen 16.5, 16.6 nicht erforderlich.

Indem insbesondere die Hydraulikanschlüsse 16.2 und 16.3, die Fluidkanäle 16.5 und 16.6 und die zentrale Bohrung 16.4 mit dem Vorsprung 16.7 als Hubanschlag in dem Niveauregelkolben 16 ausgestaltet sind, liegt eine integrale Konstruktion des Niveauregelkolbens 16 vor.

Demnach kann der Niveauregelzylinder 18 vergleichsweise einfach ausgestaltet sein, insbesondere mit einem zumindest im Wesentlichen konstanten Innendurchmesser 18.3.

Des Weiteren wird durch die Anordnung der Hydraulikanschlüsse 16.2 und 16.3 an dem Niveauregelkolben 16 die platzsparende tangentiale Ankopplung externer Fluidleitungen ermöglicht.

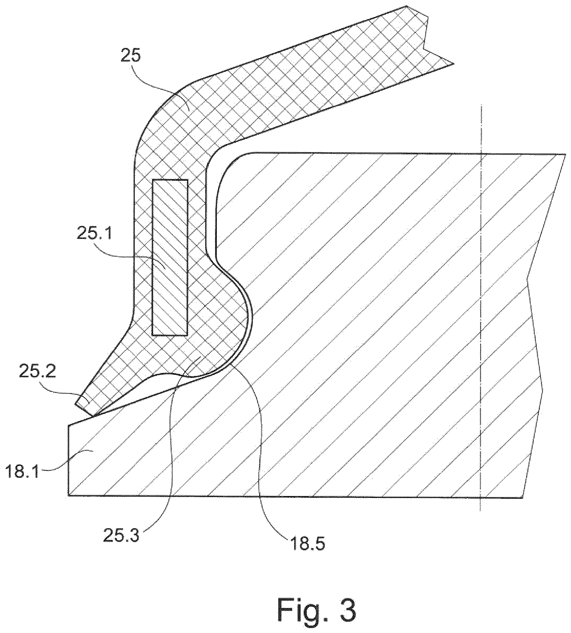

In Fig. 3 ist eine Detailansicht des Ausführungsbeispiels nach Fig. 1 mit einem Balg 25, befestigt an dem Niveauregelzylinder 18, dargestellt.

Der Balg 25 weist ein ringförmig ausgestaltetes Versteifungselement 25.1 mit einem rechteckigen Querschnitt auf.

Das Versteifungselement 25.1 ist vollständig in die Wand des Balgs 25 integriert.

Anhand des Versteifungselements 25.1 weist der Balg 25 einen Seitenwandabschluss auf, der zum zweckmäßigen Eingriff in eine umlaufende Aufnahmenut 18.5 des kragenförmigen Absatzes 18.1 des Niveauregelzylinders 18 geeignet ist.

Ferner weist der kragenförmige Absatz 16.1 des Niveauregelkolbens 16 eine Aufnahmenut 16.8 zur Aufnahme des Balgs 25 auf.

Dadurch ist ein weiterer Seitenwandabschluss des Balgs ebenfalls zum zweckmäßigen Eingriff in die umlaufende Aufnahmenut 16.8 des kragenförmigen Absatzes 16.1 des Niveauregelkolbens 16 geeignet.

Anhand des Versteifungselements 25.1 ist eine zweckmäßige, lokale Versteifung des Balges bereitstellbar.

Des Weiteren wirkt das Versteifungselement 25.1 formgebend auf den Balg 25, insbesondere entlang des Seitenwandabschluss zum Eingriff in die Aufnahmenut 18.5.

Der Balg 25 kann sicher und lösbar in die Aufnahmenut 18.5 des Niveauregelzylinders 18 eingreifen.

Ferner kann vorgesehen sein, dass der Balg 25 sicher und lösbar in die Aufnahmenut 16.8 des Niveauregelkolbens 16 eingreifen kann.

Auf diese Weise wird anhand des Versteifungselements 25.1 eine integrierte Versteifungsfunktion zur Stabilisierung des Balges 25 sowie eine integral ausgestaltete Sicherungsfunktion bereitgestellt.

Insbesondere kann der Balg 25 im Bereich des Versteifungselements 25.1 mit einer Wulst 25.3 ausgebildet sein, die zum Eingriff in die Aufnahmenut 16.8, 18.5 des Niveauregelzylinders 18 und des Niveauregelkolbens 16 geeignet ist.

Die Wulst 25.3 ist so ausgebildet, dass eine mögliche Rotation des Zylinders nicht zu einem Verdrillen des Balges 25 führt.

Darüber hinaus weist der Balg eine nach außen, in Umfangsrichtung abstehende Dichtlippe 25.2 auf.

Die Dichtlippe 25.2 soll verhindern, dass Schmutz zwischen der Wulst 25.3 und der Aufnahmenut 16.8, 18.5 die rotatorische Leichtgängigkeit des kragenförmigen Absatzes 18.2 des Niveauregelzylinders 18 bzw. Balges 25 erschwert.

Anhand der Dichtlippe 25.2 wird auch eine Verschmutzung oder ein sonstiger Eintrag von Fremdkörper unter den Balg 25, in den Bereich der Distanzelemente 28 und der Gleitfläche zwischen Niveauregelkolben 16 und Niveauregelzylinder 16, vermieden.

Zusammenfassend stellt die vorliegende Erfindung eine integrale Konstruktion dar, um eine platzsparende Ausgestaltung als auch funktionale Eigenschaften des Systems in einer einfachen Art und Weise zu realisieren.

Im Allgemeinen ermöglicht die Anordnung wenigstens eines Distanzelements 28 die sichere Beabstandung zwischen Niveauregelzylinder 18 und Niveauregelkolben 16, insbesondere im Fehlerfall, und ist vorzugsweise im zusammengesetzten, einsatzbereiten Zustand des Niveauregelsystems einstellbar.

Des Weiteren ermöglicht das zentral angeordnete Befestigungselement 13 eine einfache, sichere und zweckmäßige Verbindung des Niveauregelkolbens 16 mit dem Niveauregelzylinder 18.

Darüber hinaus ist die Anordnung und Befestigung eines Balgs 25 auf eine einfache und kostengünstige Weise mittels einer integralen Konstruktion des Niveauregelzylinders 18 und des Balgs 25 erzielbar.

Schlussendlich ist die vorliegende Erfindung dazu in der Lage, eine integrale Konstruktion eines Niveauregelsystems bereitzustellen, sodass wesentliche Vorteile sowohl bei der Montage, der Instandhaltung als auch während des Betriebs erzielt werden können.

### BEZUGSZEICHEN

- 10: Niveauregelsystem
- 12: Wagenkasten (eines Schienenfahrzeugs)
- 13: Befestigungselement
- 14: Verschlusselement
- 14.1: Durchgangsbohrung
- 14.2: umfangsseitige Nut
- 16: Niveauregelkolben
- 16.1: kragenförmiger Absatz
- 16.2: erster Hydraulikanschluss
- 16.3: zweiter Hydraulikanschluss
- 16.4: zentrale Bohrung
- 16.5: erster Fluidkanal
- 16.6: zweiter Fluidkanal
- 16.7: Vorsprung
- 16.8: Aufnahmenut
- 17: Zylinderdichtung
- 18: Niveauregelzylinder
- 18.1: kragenförmiger Absatz
- 18.2: offene Zylinderseite
- 18.3: Innendurchmesser
- 18.4: zentrale Bohrung
- 18.5: Aufnahmenut
- 22: Spiralfeder
- 23: Schichtfeder
- 24.1: erste Fixierscheibe
- 24.2: zweite Fixierscheibe
- 25: Balg
- 25.1: Versteifungselement
- 25.2: Dichtlippe
- 25.3: Wulst
- 26: Anschlagpuffer
- 27: Fahrwerk
- 28: Distanzelement
- 28.1: Fixierelement
- X: Längsachse (des Niveauregelzylinders und des Niveauregelkolbens)

## Patentansprüche

1. Niveauregelsystem (10) zur Einstellung des Niveaus eines Fahrzeugs, insbesondere Schienenfahrzeugs, mit wenigstens einem Niveauregelzylinder (18) und einem Niveauregelkolben (16), wobei der Niveauregelkolben (16) wenigstens teilweise in dem Niveauregelzylinder (18) beweglich aufgenommen ist, wobei der Niveauregelzylinder (18) einen kragenförmigen Absatz (18.1) aufweist, wobei das Niveauregelsystem (10) eine erste Fixierscheibe (24.1) aufweist, die mit dem Niveauregelkolben (16) zur Übertragung einer Hubbewegung verbunden ist, wobei zwischen dem kragenförmigen Absatz (18.1) des Niveauregelzylinders (18) und der ersten Fixierscheibe (24.1) wenigstens ein Distanzelement (28) angeordnet ist,
wobei das Niveauregelsystem (10) wenigstens einen Balg (25) aufweist, welcher zwischen dem kragenförmigen Absatz (18.1) des Niveauregelzylinders (18) und der ersten Fixierscheibe (24.1) und/oder einem kragenförmigen Absatz (16.1) des Niveauregelkolbens (16) angeordnet ist,
wobei der kragenförmige Absatz (18.1) des Niveauregelzylinders (18) und/oder der kragenförmige Absatz (16.1) des Niveauregelkolbens (16) eine Aufnahmenut (18.5, 16.8) aufweist, zur Aufnahme des Balgs (25),
**dadurch gekennzeichnet, dass**
der Balg (25) ein Versteifungselement (25.1) derart aufweist, dass der Balg (25) in der Aufnahmenut (18.5, 16.8) des Niveauregelzylinders (18) und/oder des Niveauregelkolbens (16) lösbar und drehbar fixiert ist,
wobei das Versteifungselement (25.1) entlang eines Umfangs des Balgs (25) integriert vorgesehen ist.

2. Niveauregelsystem (10) nach Anspruch 1,
**dadurch gekennzeichnet, dass**
der Niveauregelkolben (16) den kragenförmigen Absatz (16.1) in Kontakt mit der ersten Fixierscheibe (24.1) aufweist, sodass das wenigstens eine Distanzelement (28) zwischen den kragenförmigen Absätzen (16.1; 18.1) des Niveauregelkolbens (16) und des Niveauregelzylinders (18) angeordnet ist.

3. Niveauregelsystem (10) nach Anspruch 1 oder 2
**dadurch gekennzeichnet, dass**
unmittelbar zwischen dem kragenförmigen Absatz (18.1) des Niveauregelzylinders (18) und einem Wagenkasten (12) des Fahrzeugs, insbesondere Schienenfahrzeugs, das wenigstens eine Distanzelement (28) anordenbar ist.

4. Niveauregelsystem (10) nach einem der Ansprüche 1 bis 3,
**dadurch gekennzeichnet, dass**
das wenigstens eine Distanzelement (28) als eine Halbsegmentscheibe oder Teilsegmentscheibe ausgebildet ist.

5. Niveauregelsystem (10) nach einem der Ansprüche 1 bis 3,
**dadurch gekennzeichnet, dass**
das wenigstens eine Distanzelement (28) an dem kragenförmigen Absatz (16.1; 18.1) des Niveauregelkolbens (16) oder des Niveauregelzylinders (18), der ersten Fixierscheibe (24.1) oder dem Wagenkasten (12) befestigbar ist.

6. Niveauregelsystem (10) nach einem der vorhergehenden Ansprüche,
**dadurch gekennzeichnet, dass**
das wenigstens eine Distanzelement (28) mittels wenigstens eines magnetischen Befestigungselements befestigbar ist oder aus einem magnetischen Werkstoff ausgebildet ist.

7. Niveauregelsystem (10) nach einem der vorhergehenden Ansprüche,
**dadurch gekennzeichnet, dass**
wenigstens zwei Distanzelemente (28) zwischen dem kragenförmigen Absatz (18.1) des Niveauregelzylinders (18) und der ersten Fixierscheibe (24.1) symmetrisch verteilt angeordnet sind.

8. Niveauregelsystem (10) nach einem der vorhergehenden Ansprüche,
**dadurch gekennzeichnet, dass**
die wenigstens zwei Distanzelemente (28) unmittelbar zwischen dem kragenförmigen Absatz (18.1) des Niveauregelzylinders (18) und dem Wagenkasten (12) des Fahrzeugs, insbesondere Schienenfahrzeugs, symmetrisch anordenbar sind.

9. Niveauregelsystem (10) nach einem der vorhergehenden Ansprüche, **dadurch gekennzeichnet, dass**
das Niveauregelsystem (10) ein einzelnes, insbesondere zentral angeordnetes, Befestigungselement (13) aufweist, zur Verbindung des Niveauregelkolbens (16) mit dem Niveauregelzylinder (18).

## Claims

1. Level control system (10) for adjusting the level of a vehicle, in particular a rail vehicle, having at least one level control cylinder (18) and a level control piston (16), wherein the level control piston (16) is at least partially movably located in the level control cylinder (18), wherein the level control cylinder (18) has a collar-shaped recess (18.1), wherein the level control system (10) has a first fixing disc (24.1), which is connected to the level control piston (16) to transmit a lifting movement, wherein at least one spacer element (28) is arranged between the collar-shaped recess (18.1) of the level control cylinder (18) and the first fixing disc (24.1), wherein the level control system (10) has at least one bellows unit (25), which is arranged between the collar-shaped recess (18.1) of the level control cylinder (18) and the first fixing disc (24.1) and/or a collar-shaped recess (16.1) of the level control piston (16),
wherein the collar-shaped recess (18.1) of the level control cylinder (18) and/orthe collar-shaped recess (16.1) of the level control piston (16) has a locating groove (18.5, 16.8) for locating the bellows unit (25),
**characterised in that**
the bellows unit (25) has a reinforcing element (25.1) such that the bellows unit (25) is detachably and rotatably fixed in the locating groove (18.5, 16.8) of the level control cylinder (18) and/or the level control piston (16),
wherein the reinforcing element (25.1) is intended to be integrated along a circumference of the bellows unit (25).

2. Level control system (10) according to claim 1,
**characterised in that**
the level control piston (16) has the collar-shaped recess (16.1) in contact with the first fixing disc (24.1), such that the at least one spacer element (28) is arranged between the collar-shaped recesses (16.1, 18.1) of the level control piston (16) and the level control cylinder (18).

3. Level control system (10) according to claim 1 or 2
**characterised in that**
the at least one spacer element (28) can be arranged directly between the collar-shaped recess (18.1) of the level control cylinder (18) and a vehicle body (12) of the vehicle, in particular a rail vehicle.

4. Level control system (10) according to any one of claims 1 to 3,
**characterised in that**
the at least one spacer element (28) is designed as a half segment disc or a partial segment disc.

5. Level control system (10) according to any one of claims 1 to 3,
**characterised in that**
the at least one spacer element (28) can be attached to the first fixing disc (24.1) or the vehicle body (12) at the collar-shaped recess (16.1, 18.1) of the level control piston (16) or the level control cylinder (18).

6. Level control system (10) according to any one of the preceding claims, **characterised in that**
the at least one spacer element (28) can be attached by means of at least one magnetic fixing element or is made from a magnetic material.

7. Level control system (10) according to any one of the preceding claims, **characterised in that**
at least two spacer elements (28) are arranged symmetrically distributed between the collar-shaped recess (18.1) of the level control cylinder (18) and the first fixing disc (24.1).

8. Level control system (10) according to any one of the preceding claims, **characterised in that**
the at least two spacer elements (28) can be symmetrically arranged directly between the collar-shaped recess (18.1) of the level control cylinder (18) and the vehicle body (12) of the vehicle, in particular a rail vehicle.

9. Level control system (10) according to any one of the preceding claims, **characterised in that**
the level control system (10) has a single, in particular centrally arranged, fixing element (13) for connecting the level control piston (16) to the level control cylinder (18).

## Revendications

1. Système de mise à niveau (10) pour l'ajustement du niveau d'un véhicule, en particulier d'un véhicule ferroviaire, avec au moins un cylindre de mise à niveau (18) et un piston de mise à niveau (16), dans lequel le piston de mise à niveau (16) est reçu de manière mobile au moins partiellement dans le cylindre de mise à niveau (18), dans lequel le cylindre de mise à niveau (18) présente un épaulement (18.1) en forme de collet, dans lequel le système de mise à niveau (10) présente un premier disque de fixation (24.1) qui est relié au piston de mise à niveau (16) pour la transmission d'un mouvement de levage, dans lequel au moins un élément d'écartement (28) est agencé entre l'épaulement (18.1) en forme de collet du cylindre de mise à niveau (18) et le premier disque de fixation (24.1), dans lequel le système de mise à niveau (10) présente au moins un soufflet (25) qui est agencé entre l'épaulement (18.1) en forme de collet du cylindre de mise à niveau (18) et le premier disque de fixation (24.1) et/ou un épaulement (16.1) en forme de collet du piston de mise à niveau (16),
dans lequel l'épaulement (18.1) en forme de collet du cylindre de mise à niveau (18) et/ou l'épaulement (16.1) en forme de collet du piston de mise à niveau (16) présente une rainure de réception (18.5, 16.8) pour la réception du soufflet (25),
**caractérisé en ce que**
le soufflet (25) présente un élément de renforcement (25.1) de telle manière que le soufflet (25) soit fixé de manière amovible et rotative dans la rainure de réception (18.5, 16.8) du cylindre de mise à niveau (18) et/ou du piston de mise à niveau (16),
dans lequel l'élément de renforcement (25.1) est prévu de manière intégrée le long d'une périphérie du soufflet (25).

2. Système de mise à niveau (10) selon la revendication 1,
**caractérisé en ce que**
le piston de mise à niveau (16) présente l'épaulement (16.1) en forme de collet en contact avec le premier disque de fixation (24.1), de sorte que l'au moins un élément d'écartement (28) soit agencé entre les épaulements 16.1 ; 18.1) en forme de collet du piston de mise à niveau (16) et du cylindre de mise à niveau (18).

3. Système de mise à niveau (10) selon la revendication 1 ou 2,
**caractérisé en ce que**
l'au moins un élément d'écartement (28) peut être agencé directement entre l'épaulement (18.1) en forme de collet du cylindre de mise à niveau (18) et une carrosserie (12) du véhicule, en particulier du véhicule ferroviaire.

4. Système de mise à niveau (10) selon l'une quelconque des revendications 1 à 3, **caractérisé en ce que**
l'au moins un élément d'écartement (28) est formé comme un disque de demi-segment ou disque de segment partiel.

5. Système de mise à niveau (10) selon l'une quelconque des revendications 1 à 3, **caractérisé en ce que**
l'au moins un élément d'écartement (28) peut être fixé à l'épaulement (16.1 ; 18.1) en forme de collet du piston de mise à niveau (16) ou du cylindre de mise à niveau (18), du premier disque de fixation (24.1) ou de la carrosserie (12).

6. Système de mise à niveau (10) selon l'une quelconque des revendications précédentes,
**caractérisé en ce que**
l'au moins un élément d'écartement (28) peut être fixé au moyen d'au moins un élément de fixation magnétique ou est formé à partir d'un matériau magnétique.

7. Système de mise à niveau (10) selon l'une quelconque des revendications précédentes,
**caractérisé en ce que**
au moins deux éléments d'écartement (28) sont agencés de manière répartie symétriquement entre l'épaulement (18.1) en forme de collet du cylindre de mise à niveau (18) et le premier disque de fixation (24.1).

8. Système de mise à niveau (10) selon l'une quelconque des revendications précédentes,
**caractérisé en ce que**
les au moins deux éléments d'écartement (28) peuvent être agencés symétriquement directement entre l'épaulement (18.1) en forme de collet du cylindre de mise à niveau (18) et la carrosserie (12) du véhicule, en particulier du véhicule ferroviaire.

9. Système de mise à niveau (10) selon l'une quelconque des revendications précédentes,
**caractérisé en ce que**
le système de mise à niveau (10) présente un élément de fixation (13) individuel, agencé en particulier de manière centrale, pour la liaison du piston de mise à niveau (16) avec le cylindre de mise à niveau (18).
